# FASCICULE DE BREVET EUROPEEN

(11) **EP 2 667 036 B1**
(45) Date de publication et mention de la délivrance du brevet: **11.03.2015**
(21) Numéro de dépôt: 13168753.5
(22) Date de dépôt: 22.05.2013
(51) Int. Cl.: F16J 15/00

(54) **Système d'étanchéité à compensation de pression pour arbre de rotation ou de translation**
Abdichtungssystem mit Druckkompensation für Dreh- oder Fahrwerkswelle
Sealing system with pressure compensation for rotation or translation shaft

(30) Priorité: 23.05.2012 FR 1254704
(43) Date de publication de la demande: 27.11.2013
(73) Titulaire: ALSTOM Renewable Technologies, 92300 Levallois Perret (FR)
(72) Inventeur: Robic, Thomas, 44000 Nantes (FR)
(74) Mandataire: Rondinara, Lucio Maria

(56) Documents cités:
- EP-A1- 1 586 798
- DE-B- 1 199 562
- GB-A- 2 205 365
- US-A- 3 088 744
- US-A- 3 176 996

## Description

La présente invention concerne un système d'étanchéité à compensation de pression pour arbre de rotation ou de translation d'une machine (voir US 3176996 A).

L'invention se situe dans le domaine de l'étanchéité dynamique, qui est en particulier nécessaire dans l'utilisation de machines tournantes immergées, comme par exemple la génération d'énergie hydraulique et le forage sous-marin.

La problématique d'assurer l'étanchéité d'un compartiment rempli d'un fluide, par exemple un lubrifiant, et formé radialement autour d'un arbre de rotation d'une machine tournante, est bien connue, la rotation de l'arbre provocant des frottements et par conséquent une usure importante des joints positionnés radialement autour de celui-ci si les écarts de pressions sont trop importants entre les chambres.

Lorsqu'une telle machine tournante est utilisée dans une installation immergée, le problème est d'autant plus important que la maintenance est très coûteuse et l'intervention humaine régulière pour vérifier le bon fonctionnement est exclue.

De plus, lorsqu'une machine tournante est utilisée dans une application sous-marine, un problème supplémentaire se pose du fait de la présence des déplacements d'eau par les vagues et des variations du niveau de la mer et lors des phases d'immersion et d'extraction de la machine sous l'eau, qui font ainsi varier la pression externe appliquée sur le joint externe d'un système d'étanchéité dynamique. De telles variations de pression risquent de provoquer des fuites ou des usures prématurées des joints.

On connaît dans l'état de la technique un système d'étanchéité dynamique à double joint, comme par exemple le joint « Supreme Ventus » (marque déposée), comportant un contrôle actif de la pression entre les joints effectué par une unité de contrôle à air, la pression de l'air étant ajustée via une unité de contrôle (limiteur de pression, clapets, limiteur de pression et capteurs). Cette solution permet de compenser des variations locales de pression et d'assurer l'étanchéité dynamique en milieu sous-marin, mais elle est complexe et nécessite un contrôle actif, via des capteurs et une boucle de régulation active.

Le but de l'invention est de résoudre ces problèmes de l'état de la technique en proposant un système d'étanchéité dynamique qui soit plus simple et plus robuste, tout en assurant l'étanchéité en cas de variation de pression externe.

A cet effet, l'invention propose un système d'étanchéité à compensation de pression pour arbre de rotation ou de translation d'une machine, adapté à assurer l'étanchéité d'un compartiment comportant un premier fluide et formé radialement autour de l'arbre, comprenant au moins un joint à lèvre adapté pour isoler ledit compartiment, ledit joint étant positionné radialement autour de l'arbre et retenu par un porte-joint. Le système d'étanchéité selon l'invention comprend :
- un dispositif multiplicateur de pression raccordé au porte-joint, comportant un tube cylindrique et un piston muni de deux têtes de diamètres différents, apte à séparer le tube cylindrique en deux chambres isolées de diamètres différents correspondant respectivement aux diamètres des têtes de piston, la chambre de diamètre inférieur étant raccordée au porte-joint et en communication avec le premier fluide, la chambre de diamètre supérieur étant au moins partiellement remplie d'un deuxième fluide, le dispositif multiplicateur de pression comportant en outre un soufflet de protection étanche, positionné par-dessus la tête de piston de diamètre supérieur et
- un dispositif de récupération de fluide, raccordé à la chambre de diamètre supérieur, rempli d'un gaz et adapté à recueillir une partie du deuxième fluide de ladite chambre lors d'un déplacement du piston, de manière à assurer que la pression au niveau du premier fluide en contact avec ledit joint est supérieure à la pression extérieure appliquée sur ledit joint.

Avantageusement, le système d'étanchéité selon l'invention comporte un dispositif multiplicateur de pression, ce qui permet d'assurer, même en cas de variation de pression, due par exemple à la présence de vagues, des variations du niveau de la mer et lors des phases d'immersion et d'extraction de la machine sous l'eau, que la pression extérieure exercée sur le joint à lèvre est inférieure à la pression au niveau du fluide situé à l'intérieur du compartiment. Avantageusement, le système d'étanchéité selon l'invention est bien moins complexe que les dispositifs intégrant une boucle de régulation active, puisqu'il est totalement passif et sans nécessité de régulation active via des capteurs.

Le système d'étanchéité selon l'invention peut présenter une ou plusieurs des caractéristiques ci-dessous :
- il comprend deux dits joints à lèvre positionnés face à face ou dos à dos, et ledit dispositif multiplicateur de pression est raccordé au porte-joint et en communication avec un compartiment interne formé entre les deux joints ;
- la pression du fluide à l'intérieur du compartiment à isoler est équilibrée avec la pression extérieure au compartiment à l'aide d'une membrane ou d'un soufflet positionné sur le compartiment à isoler;
- le rapport entre le diamètre supérieur et le diamètre inférieur des têtes de piston est compris entre 1 et 2 ;
- il comporte en outre au moins un joint gonflable pilotable par une vanne positionné radialement autour de l'arbre ;
- ledit premier fluide est une huile lubrifiante ;
- lesdits premier et deuxième fluide sont les mêmes et il comprend en outre une pompe raccordable sous l'eau, apte à approvisionner ledit tube cylindrique en fluide ;
- lesdites têtes de piston et sont équipées de joints ;
- lesdits joints à lèvre sont positionnés sur une chemise revêtue d'un dépôt montée sur l'arbre.

D'autres caractéristiques et avantages de l'invention ressortiront de la description qui en est donnée ci-dessous, à titre indicatif et nullement limitatif, en référence aux figures annexées, parmi lesquelles :
- la figure 1 représente une vue en coupe schématique d'un système d'étanchéité positionné sur un arbre selon un premier mode de réalisation de l'invention ;
- la figure 2 représente une vue en coupe schématique d'un système d'étanchéité positionné sur un arbre selon un deuxième mode de réalisation de l'invention ;
- la figure 3 représente une première variante du premier mode de réalisation illustré à la figure 1, et
- la figure 4 représente une deuxième variante du premier mode de réalisation illustré à la figure 1.

L'invention sera décrite ci-après dans son application à un arbre de rotation faisant partie d'une machine tournante de production d'énergie électrique à partir d'énergie hydraulique, qui fonctionne en immersion.

Cependant, le système d'étanchéité dynamique selon l'invention s'applique pour toute pièce faisant partie d'une machine dans laquelle une étanchéité dynamique, en translation ou en rotation, est nécessaire entre deux fluides, dans des situations de forage, pour d'autres applications sous-marines que l'application de production d'énergie, ou toute autre application mettant en oeuvre une machine dans laquelle une étanchéité dynamique est nécessaire entre deux fluides.

Le système d'étanchéité dynamique présente des avantages particuliers dans un fonctionnement en immersion, où la pression de l'eau est changeante selon les mouvements d'eau. Néanmoins, le système d'étanchéité fonctionne également lorsque la machine tournante est située en surface à l'air libre.

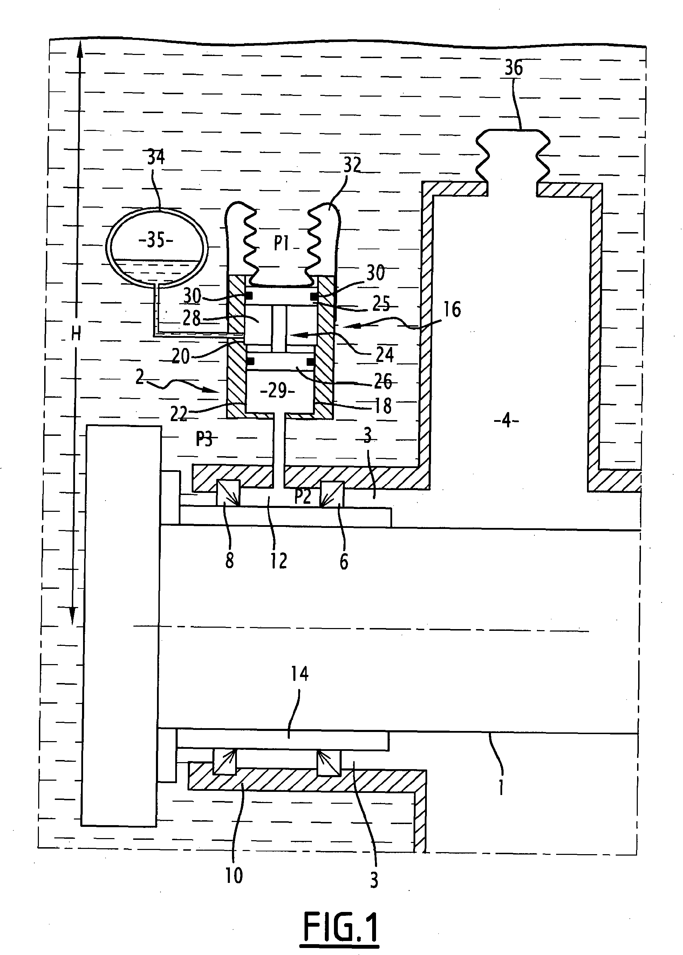

La figure 1 représente en coupe un arbre de rotation 1 d'une machine tournante non représentée, qui est immergé sous une hauteur H d'eau.

La profondeur H est typiquement comprise entre 20m et 80m, mais il n'y a pas de profondeur limite interdisant l'utilisation d'un tel système.

Dans l'application considérée, le milieu externe est donc un milieu constitué d'eau, dont la hauteur varie périodiquement à cause de la présence de vagues, des variations du niveau de la mer et lors des phases d'immersion et d'extraction de la machine.

Sur l'arbre 1 est positionné radialement un système d'étanchéité 2 selon un premier mode de réalisation de l'invention, destiné à sceller de manière étanche le compartiment 3 formé entre l'arbre 1 et une pièce fixe. Le compartiment 3 est rempli d'un fluide 4, dit également fluide intérieur par opposition au fluide extérieur qui est l'eau dans ce mode de réalisation. Le fluide intérieur est par exemple un lubrifiant, de type huile ou graisse.

Le système d'étanchéité 2 comprend, dans ce mode de réalisation, deux joints notés respectivement 6 et 8, qui sont des joints à lèvre, retenus par un porte-joint 10 radialement autour de l'arbre 1. Le porte-joint 10 fait partie de la pièce de la machine tournante qui forme le compartiment 3, par exemple une pièce fixe attachée à l'arbre de rotation 1.

Le joint 6 est au contact du fluide intérieur sur deux de ses côtés, alors que le joint 8 est un joint externe, au contact du fluide intérieur sur un de ses côtés et au contact de l'eau, ou plus généralement du milieu extérieur, sur le côté opposé.

Les joints 6 et 8 sont par exemple des joints à lèvres en matière synthétique.

Les deux joints 6 et 8 forment un compartiment interne 12 rempli de fluide de type huile ou graisse. Il s'agit, dans cet exemple, du même fluide que le fluide intérieur du compartiment 3, mais cela n'est pas nécessaire.

Des flèches sont ajoutées pour illustrer le sens préférentiel de la pression afin d'éviter les fuites lors du fonctionnement de l'arbre de rotation 1.

Les joints 6 et 8 sont montés dos à dos ou face à face, donc en sens opposés.

Dans la réalisation de la figure 1, il est indiqué que pour le joint 8, il est préférable que la pression dans le compartiment 12 soit supérieure à la pression externe de l'eau.

Pour le joint 6, il est préférable que la pression dans le compartiment 12 soit supérieure à la pression du fluide intérieur du compartiment 3 exercée sur la face opposée du joint 8.

Dans le mode de réalisation illustré à la figure 1, les joints respectifs 6 et 8 sont disposés sur une chemise 14 revêtue d'un dépôt pour limiter l'usure de l'arbre 1.

Un dispositif multiplicateur de pression 16 est raccordé au porte-joint 10 de manière à être en communication avec le compartiment 12 formé entre les deux joints.

Le dispositif multiplicateur de pression 16 est de type vérin hydraulique et comporte un tube cylindrique 18 en deux parties 20 et 22 de diamètres différents, et un piston 24 comportant deux têtes 25 et 26 de diamètres différents notés respectivement d1 et d2, correspondant aux parties intérieures du tube 18. Le piston 24 forme, au repos, deux chambres 28 et 29 isolées dans le tube cylindrique 18, les têtes de piston 25 et 26 étant emboîtées dans les parties correspondantes du tube cylindrique à l'aide de joints 30.

La chambre 29 de diamètre inférieur est en communication avec le compartiment 12 formé entre les joints 6 et 8. Le tube interne 18 du dispositif multiplicateur de pression est rempli du fluide également présent dans le compartiment 12, par exemple de l'huile.

En variante, les chambres 28 et 29 sont respectivement remplies de fluides différents.

Dans ce mode de réalisation le dispositif multiplicateur de pression comporte également un soufflet de protection 32 étanche, positionné au-dessus de la tête 25 de plus grand diamètre. Ce soufflet de protection 32, réalisé de préférence en matière élastomère, est par exemple collé sur l'extérieur du tube 18, et permet de protéger la tête de piston 25 de la corrosion. Il permet également de recueillir des petites fuites d'huile qui peuvent se produire.

Un récupérateur de fluide 34 est raccordé à la partie 20 de diamètre supérieur du tube 18, correspondant à la chambre 28 de diamètre supérieur formée par le piston au repos. Le récupérateur de fluide 34 comprend du fluide et un gaz 35 et a pour fonction de récupérer le fluide de la chambre 28 lorsque le piston 24 descend. Le gaz 35 contenu dans le récupérateur de fluide 34 se comprime lorsque le piston descend.

Le piston 24 est dimensionné pour avoir une masse suffisante pour pouvoir appliquer une pression dans le compartiment 12 et pour contrer la pression due à la colonne de fluide du récupérateur de fluide 34. Une telle masse permet de garantir le fonctionnement du système d'étanchéité, même lorsque la machine tournante est placée en surface à l'air libre.

De plus, le système d'étanchéité comprend, dans ce mode de réalisation, une membrane 36, ou un soufflet étanche, positionné sur une paroi du compartiment 3, qui a pour fonction de garantir une pression égale entre l'eau et le fluide intérieur du compartiment 3 à son niveau. De préférence, lorsque le compartiment 3 est formé par une pièce fixe attachée à l'arbre de rotation, la membrane 36 est positionnée sur une paroi haute de la pièce fixe, de manière à ce que la pression au niveau de la membrane 36 soit systématiquement supérieure à la pression du fluide intérieur au niveau de l'arbre 1 et donc au niveau de la face du joint 6 au contact du compartiment 3. Cette propriété est vérifiée dans la mesure où le fluide intérieur a une masse volumique inférieure à la masse volumique de l'eau, ce qui est en particulier le cas pour l'huile.

Lorsque le niveau d'eau H au dessus de la machine tournante immergée varie, la pression de l'eau varie, avec une variation de plus ou moins 1 bar au niveau de la pression P1 au dessus du piston 24.

Grâce au dispositif multiplicateur de pression 16, la pression P2 au niveau du fluide intérieur, dans le compartiment 12, est toujours supérieure à la pression de l'eau P3 appliquée au joint externe 8 sur sa face externe, qui est au contact de l'eau.

Lorsque la pression P1 augmente, la pression P2 est augmentée par le rapport des diamètres des têtes des pistons 25 et 26, ce qui augmente la pression P2 au niveau du compartiment 12.

Si une partie du fluide s'échappe du compartiment 12, le piston 24 descend et du fluide de la chambre 28 est expulsé vers le dispositif de récupération de fluide 34. Le gaz du dispositif de récupération de fluide se comprime légèrement sans impact sur le fonctionnement à condition d'avoir un volume de gaz initial prépondérant devant le volume de fluide à récupérer.

Ainsi, il est possible de dimensionner le dispositif multiplicateur de pression 16 pour que la variation de pression ΔP=P2-P3 soit toujours positive et toujours dans la plage de fonctionnement optimal des joints.

Les diamètres respectifs des têtes de piston 25 et 26, d1 et d2, sont calculés par rapport aux conditions d'utilisation envisagées. Par exemple, avec un multiplicateur dont les dimensions sont d1=0,48m et d2=0,457m, le système d'étanchéité selon l'invention garantit la compensation de pression à H=30 m de profondeur. Ainsi, par exemple, pour une pression P1 de 3,02 bars et P3 de 3,12 bars, la pression P2 est de 3,49 bars.

De préférence, le rapport d1/d2 entre le diamètre supérieur et le diamètre inférieur est compris entre 1 et 2. Plus la profondeur sera importante, plus le rapport des diamètres d1/d2 devra être proche de 1, pour limiter la différence de pression entre P3 et P2.

Le dimensionnement des diamètres d1 et d2 est sélectionné de manière à ce que la différence de pression appliquée respectivement sur chacun des joints soit limitée à une plage donnée, par exemple à 0,4 bars ± 0,3 bars, qui est une plage de bon fonctionnement des joints.

Avantageusement, il est vérifié par calcul que le système d'étanchéité avec les mêmes dimensions fonctionne de manière satisfaisante à 80m de profondeur et également à l'air libre. Ainsi, le système d'étanchéité de l'invention est apte à fonctionner à des hauteurs variables et des niveaux de pression variables.

Dans le système d'étanchéité décrit ci-dessus en référence à la figure 1, deux joints d'étanchéité 6 et 8 sont utilisés, pour garantir une sécurité de fonctionnement : si le joint 8 est détérioré, une petite quantité de fluide est perdue, la chambre de diamètre inférieur du dispositif multiplicateur de pression se vide, mais le joint 6 reste étanche.

Ainsi, dans le mode de réalisation préféré, au moins deux joints sont prévus.

En variante, selon un mode de réalisation simplifié, un seul joint à lèvre est prévu dans le système d'étanchéité selon l'invention.

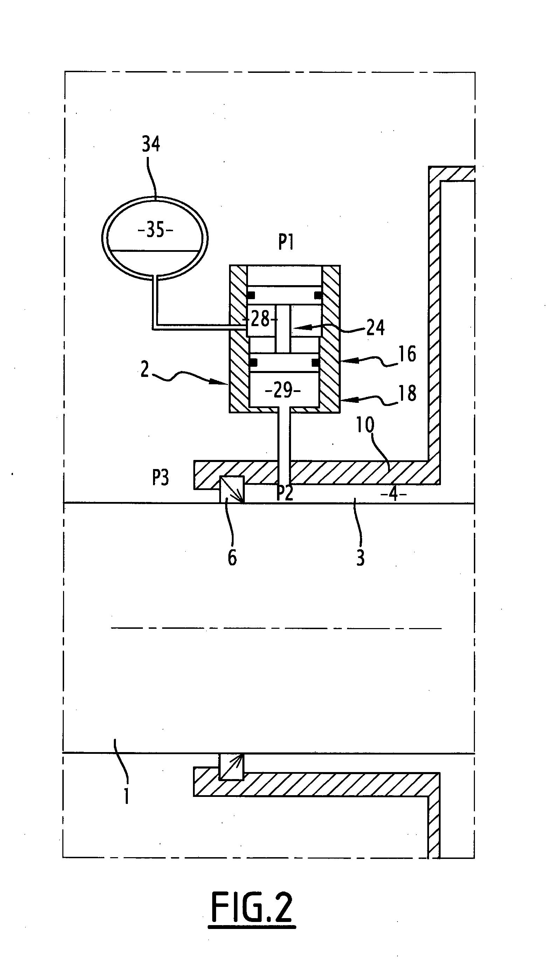

Selon ce mode de réalisation simplifié illustré à la figure 2, sur laquelle les numéros de référence pertinents de la figure 1 sont repris, le système d'étanchéité 2 comporte un seul joint à lèvre 6 positionné radialement autour de l'arbre 1. Le dispositif multiplicateur de pression 16 est analogue au dispositif multiplicateur de pression précédemment décrit, à la seule différence qu'il est raccordé au compartiment 3 et scellé par le joint 6.

Le fonctionnement est analogue au fonctionnement décrit en référence à la figure 1. Lorsque la pression P1 augmente, la pression P2 est augmentée par le rapport des diamètres des têtes de piston 25 et 26, ce qui augmente la pression P2 au niveau du compartiment 3.

Le piston est dimensionné dans ce cas également de manière à obtenir une différence de pression ΔP=P2-P3 toujours positive et comprise dans une plage choisie.

Selon encore une autre variante non représentée, il serait envisageable, à l'inverse, de rajouter encore un joint à lèvre de sécurité, formant ainsi un système à trois joints.

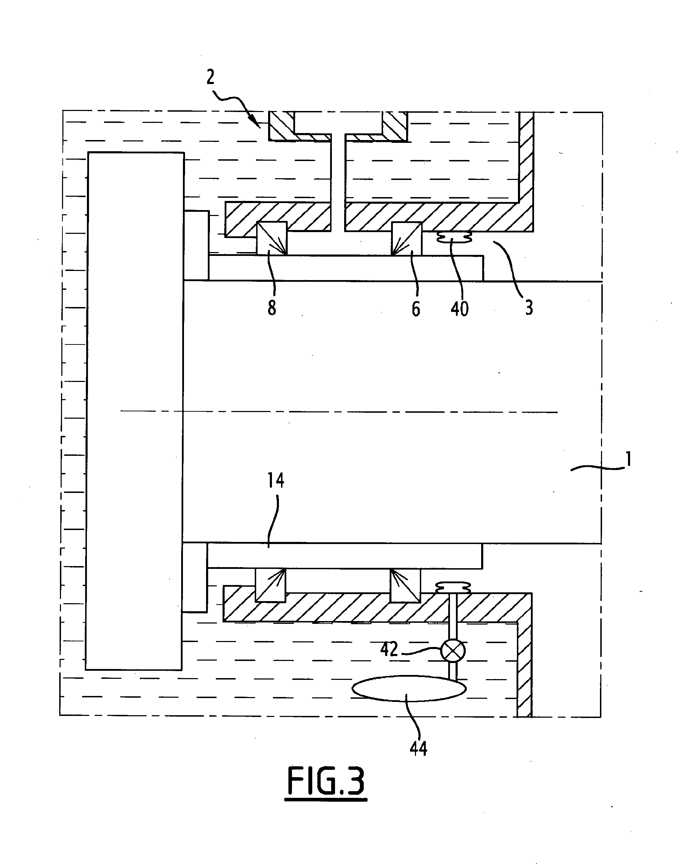

Une amélioration envisagée pour le mode de réalisation de la figure 1 est illustrée à la figure 3. Selon cette première variante améliorée, un joint gonflable 40 est ajouté. Ce joint gonflable est disposé entre le joint 6 et le compartiment 3, à proximité du joint 6, de manière à éviter des fuites massives du fluide 4 contenu dans le compartiment 3 en cas d'avarie des deux joints 6 et 8. Le joint gonflable 40 est piloté par une vanne 42, alimentée par une réserve d'air comprimé 44. L'air comprimé a par exemple une pression de 10 bars.

Un tel joint gonflable est mis en fonction lorsque la machine tournante est arrêtée, lors de son installation par exemple, ou lors de la constatation d'une avarie sur les deux joints, ou alors lorsque la réserve de fluide du dispositif multiplicateur de pression est vide. La vanne 42 est pilotée à distance, par exemple depuis la surface.

Avantageusement, la vanne 42 permet de garantir l'étanchéité en statique en cas d'avarie du système.

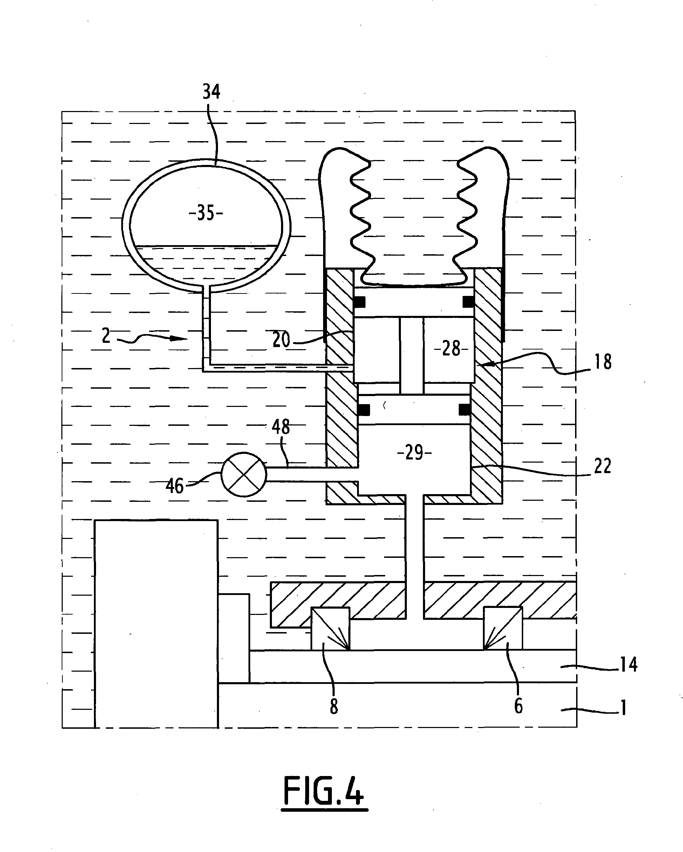

Selon une deuxième variante d'amélioration, illustrée à la figure 4, une pompe 46, raccordable sous l'eau est utilisée pour refaire le plein de fluide dans la réserve du dispositif multiplicateur. Un tube de raccord 48, en communication avec la partie 22 de diamètre inférieur du tube 18 est prévu. Ainsi, si la réserve de fluide du dispositif se vide, au bout d'une certaine durée de fonctionnement, il est prévu de réalimenter cette réserve sous l'eau, sans avoir besoin de démonter la machine tournante afin d'appliquer une maintenance en surface.

Le système d'étanchéité selon l'invention présente l'avantage de s'adapter de manière totalement passive aux variations de pression pour assurer l'étanchéité, dans une large plage de variations de pression.

## Revendications

1. Système d'étanchéité (2) à compensation de pression pour arbre (1) de rotation ou de translation d'une machine, adapté à assurer l'étanchéité d'un compartiment (3) comportant un premier fluide (4) et formé radialement autour de l'arbre (1), comprenant au moins un joint (6, 8) à lèvre adapté pour isoler ledit compartiment (3), ledit joint (6, 8) étant positionné radialement autour de l'arbre (1) et retenu par un porte-joint (10), **caractérisé en ce qu'il** comprend :
- un dispositif multiplicateur de pression (16) raccordé au porte-joint (10), comportant un tube cylindrique (18) et un piston (24) muni de deux têtes de diamètres différents, apte à séparer le tube cylindrique en deux chambres (28, 29) isolées de diamètres différents correspondant respectivement aux diamètres des têtes de piston, la chambre (29) de diamètre inférieur étant raccordée au porte-joint (10) et en communication avec le premier fluide, la chambre (28) de diamètre supérieur étant au moins partiellement remplie d'un deuxième fluide, le dispositif multiplicateur de pression (16) comportant en outre un soufflet de protection (32) étanche, positionné par-dessus la tête de piston (25) de diamètre supérieur, et
- un dispositif de récupération de fluide (34), raccordé à la chambre (28) de diamètre supérieur, rempli d'un gaz (35) et adapté à recueillir une partie du deuxième fluide de ladite chambre (28) lors d'un déplacement du piston (24), de manière à assurer que la pression (P2) au niveau du premier fluide (4) en contact avec ledit joint (6,8) est supérieure à la pression (P3) extérieure appliquée sur ledit joint (6,8).

2. Système d'étanchéité selon la revendication 1, **caractérisé en ce qu'il** comprend deux dits joints (6, 8) à lèvre positionnés face à face ou dos à dos, et **en ce que** ledit dispositif multiplicateur de pression (16) est raccordé au porte-joint (10) et en communication avec un compartiment (12) interne formé entre les deux joints (6, 8).

3. Système d'étanchéité selon la revendication 2, **caractérisé en ce que** la pression du fluide (4) à l'intérieur du compartiment (3) à isoler est équilibrée avec la pression extérieure audit compartiment (3) à l'aide d'une membrane ou d'un soufflet (36) positionné sur ledit compartiment (3) à isoler.

4. Système d'étanchéité selon l'une des revendications précédentes, **caractérisé en ce que** le rapport entre le diamètre supérieur et le diamètre inférieur est compris entre 1 et 2.

5. Système d'étanchéité selon l'une des revendications précédentes, **caractérisé en ce qu'**il comporte en outre au moins un joint gonflable (40) pilotable par une vanne (42) positionné radialement autour de l'arbre (1).

6. Système d'étanchéité selon l'une des revendications précédentes, **caractérisé en ce que** ledit premier fluide (4) est une huile lubrifiante.

7. Système d'étanchéité selon l'une des revendications précédentes, **caractérisé en ce que** lesdits premier et deuxième fluide sont les mêmes et **en ce qu'**il comprend en outre une pompe (46) raccordable sous l'eau, apte à approvisionner ledit tube cylindrique (18) en fluide.

8. Système d'étanchéité selon l'une des revendications précédentes, **caractérisé en ce que** lesdites têtes de piston (25) et (26) sont équipées de joints (30).

9. Système d'étanchéité selon l'une des revendications précédentes, **caractérisé en ce que** lesdits joints (6,8) à lèvre sont positionnés sur une chemise (14) revêtue d'un dépôt montée sur l'arbre (1).

## Patentansprüche

1. Dichtungssystem (2) mit Druckausgleich für eine Dreh- oder Translationswelle einer Maschine, das dafür ausgelegt ist, die Dichtigkeit eines Raums (3), der ein erstes Fluid (4) enthält und radial um die Welle (1) ausgebildet ist, sicherzustellen, und wenigstens eine Lippendichtung (6, 8) umfasst, die ihrerseits dafür ausgelegt ist, den Raum (3) zu isolieren, wobei die Dichtung (6, 8) radial um die Welle (1) positioniert ist und durch einen Dichtungsträger (10) gehalten wird, **dadurch gekennzeichnet, dass** es Folgendes umfasst:
- eine Druckvervielfachungsvorrichtung (16), die mit dem Dichtungsträger (10) verbunden ist und ein zylindrisches Rohr (18) und einen Kolben (24), der mit zwei Köpfen unterschiedlichen Durchmessers versehen ist und das zylindrische Rohr in zwei isolierte Kammern (28, 29) mit unterschiedlichen Durchmessern, die den jeweiligen Durchmessern der Kolbenköpfe entsprechen, trennen kann, umfasst, wobei die Kammer (29) mit kleinerem Durchmesser mit dem Dichtungsträger (10) verbunden ist und mit dem ersten Fluid kommuniziert, die Kammer (28) mit größerem Durchmesser wenigstens teilweise mit einem zweiten Fluid gefüllt ist und die Druckvervielfachungsvorrichtung (16) außerdem einen dichten Schutzbalg (32) aufweist, der über dem Kolbenkopf (25) mit größerem Durchmesser positioniert ist; und
- eine Fluidrückgewinnungsvorrichtung (34), die mit der Kammer (28) mit größerem Durchmesser verbunden ist, mit einem Gas (35) gefüllt ist und dafür ausgelegt ist, einen Teil des zweiten Fluids der Kammer (28) zu sammeln, wenn der Kolben (24) verlagert wird, derart, dass sichergestellt ist, dass der Druck (P2) auf Höhe des ersten Fluids (4) in Kontakt mit der Dichtung (6, 8) größer ist als der äußere Druck (P3), der auf die Dichtung (6, 8) ausgeübt wird.

2. Dichtungssystem nach Anspruch 1, **dadurch gekennzeichnet, dass** es zwei dieser Lippendichtungen (6, 8) umfasst, die Vorderseite an Vorderseite oder Rückseite an Rückseite angeordnet sind, und dass die Druckvervielfachungsvorrichtung (16) mit dem Dichtungsträger (10) in Kommunikation mit einem inneren Raum (12), der zwischen den zwei Dichtungen (6, 8) gebildet ist, verbunden ist.

3. Dichtungssystem nach Anspruch 2, **dadurch gekennzeichnet, dass** der Druck des Fluids (4) in dem zu isolierenden Raum (3) mit dem Druck außerhalb des Raums (3) mit Hilfe einer Membran oder eines Balgs (36), die bzw. der an dem zu isolierenden Raum (3) angeordnet ist, im Gleichgewicht ist.

4. Dichtungssystem nach einem der vorhergehenden Ansprüche, **dadurch gekennzeichnet, dass** das Verhältnis zwischen dem größeren Durchmesser und dem kleineren Durchmesser in dem Bereich von 1 bis 2 liegt.

5. Dichtungssystem nach einem der vorhergehenden Ansprüche, **dadurch gekennzeichnet, dass** es außerdem wenigstens eine aufblasbare Dichtung (40) umfasst, die durch ein radial um die Welle (1) angeordnetes Ventil (42) steuerbar ist.

6. Dichtungssystem nach einem der vorhergehenden Ansprüche, **dadurch gekennzeichnet, dass** das erste Fluid (4) ein Schmieröl ist.

7. Dichtungssystem nach einem der vorhergehenden Ansprüche, **dadurch gekennzeichnet, dass** das erste und das zweite Fluid gleich sind und dass es außerdem eine unter Wasser anschließbare Pumpe (46) umfasst, die das zylindrische Rohr (18) mit Fluid versorgen kann.

8. Dichtungssystem nach einem der vorhergehenden Ansprüche, **dadurch gekennzeichnet, dass** die Kolbenköpfe (25) und (26) mit Dichtungen (30) ausgerüstet sind.

9. Dichtungssystem nach einem der vorhergehenden Ansprüche, **dadurch gekennzeichnet, dass** die Lippendichtungen (6, 8) auf einer an der Welle (1) montierten und mit einer Ablagerung beschichteten Hülle (14) angeordnet sind.

## Claims

1. Sealing system (2) with pressure compensation for a rotation or translation shaft (1) of a machine, suitable for ensuring the sealing of a compartment (3) containing a first fluid (4) and formed radially around the shaft (1), comprising at least one lip seal (6, 8) suitable for insulating said compartment (3), said seal (6, 8) being positioned radially around the shaft (1) and retained by a seal-holder (10), **characterized in that** it comprises:
- a pressure multiplying device (16) connected to the seal-holder (10), comprising a cylindrical tube (18) and a piston (24) provided with two heads of different diameters, suitable for splitting the cylindrical tube into two insulated chambers (28, 29) of different diameters corresponding respectively to the diameters of the piston heads, the chamber (29) of smaller diameter being connected to the seal-holder (10) and in communication with the first fluid, the chamber (28) of larger diameter being at least partially filled with a second fluid, the pressure multiplying device (16) further comprising a seal-tight protection bellows (32), positioned above the piston head (25) of larger diameter, and
- a fluid recovery device (34), connected to the chamber (28) of larger diameter, filled with a gas (35) and suitable for collecting a portion of the second fluid from said chamber (28) upon a displacement of the piston (24), so as to ensure that the pressure (P2) at the level of the first fluid (4) in contact with said seal (6, 8) is greater than the external pressure (P3) applied onto said seal (6, 8).

2. Sealing system according to Claim 1, **characterized in that** it comprises two said lip seals (6, 8) positioned face-to-face or back-to-back, and **in that** said pressure multiplying device (16) is connected to the seal-holder (10) and in communication with an internal compartment (12) formed between the two seals (6, 8).

3. Sealing system according to Claim 2, **characterized in that** the pressure of the fluid (4) inside the compartment (3) to be insulated is balanced with the pressure outside said compartment (3) using a membrane or a bellows (36) positioned on said compartment (3) to be insulated.

4. Sealing system according to one of the preceding claims, **characterized in that** the ratio between the larger diameter and the smaller diameter lies between 1 and 2.

5. Sealing system according to one of the preceding claims, **characterized in that** it further comprises at least one inflatable seal (40) that can be controlled by a valve (42) positioned radially around the shaft (1).

6. Sealing system according to one of the preceding claims, **characterized in that** said first fluid (4) is a lubricating oil.

7. Sealing system according to one of the preceding claims, **characterized in that** said first and second fluids are the same and **in that** it further comprises a pump (46) that can be connected underwater, suitable for supplying said cylindrical tube (18) with fluid.

8. Sealing system according to one of the preceding claims, **characterized in that** said piston heads (25) and (26) are equipped with seals (30).

9. Sealing system according to one of the preceding claims, **characterized in that** said lip seals (6, 8) are positioned on a jacket (14) coated with a deposit mounted on the shaft (1).
